# EUROPEAN PATENT APPLICATION

(11) **EP 4 545 931 A1**
(43) Date of publication of application: **30.04.2025**
(21) Application number: 23846410.1
(22) Date of filing: 21.07.2023
(51) Int. Cl.: G01N 3/30, G01N 3/31

(54) **METHOD FOR EVALUATING TOUGHNESS RELIABILITY OF TANK**

(30) Priority: 26.07.2022 JP 2022118784
(71) Applicant: Mitsubishi Shipbuilding Co., Ltd., Tokyo 108-8015 (JP)
(72) Inventor: WATANABE Michihisa, Yokohama-shi, Kanagawa 220-8401 (JP); KUBO Toshiyuki, Yokohama-shi, Kanagawa 220-8401 (JP)
(74) Representative: Studio Torta S.p.A.
(86) International application number: PCT/JP2023/026827
(87) International publication number: WO 2024/024680

(57) **Abstract**

This method for evaluating toughness reliability of a tank includes a step for acquiring a required fracture toughness value on the basis of a change over time in a stress intensity factor and a design life of the tank, a step for acquiring a material transition temperature from a Charpy transition curve that is based on a Charpy impact test of the tank, a step for acquiring a fracture toughness value on the basis of a fracture toughness test of the tank material, a step for acquiring a design tolerance condition on the basis of a relationship between a fracture toughness value at each test temperature and a temperature index which is the inverse of a difference between each test temperature and a transition temperature, a step for acquiring a required temperature index on the basis of the design tolerance condition and the required fracture toughness value, a step for acquiring a tolerance Charpy transition curve having a requirement transition temperature that is based on the required temperature index, and a step for evaluating the toughness reliability of the tank material on the basis of the tolerance Charpy transition curve.

## Description

### Technical Field

The present disclosure relates to a toughness reliability evaluation method of a tank.

This application claims priority to Japanese Patent Application No. 2022-118784, filed in Japan on July 26, 2022, the content of which is incorporated herein by reference.

### Background Art

In various articles manufactured by using a metallic material, it is required to have a required strength and toughness according to the article. For example, PTL 1 discloses a manufacturing method of steel having excellent low-temperature toughness of a heat-affected portion by welding.

### Citation List

### Patent Literature

[PTL 1] Japanese Unexamined Patent Application Publication No. H5-247531

### Summary of Invention

### Technical Problem

Meanwhile, in a tank that stores a liquefied gas such as liquefied petroleum gas (LPG), a thickness, a strength, a toughness, and the like of a material forming the tank are determined by a regulation. On the other hand, in a tank for storing liquefied carbon dioxide, a temperature in the tank is lower than a temperature in the tank for storing LPG, although a pressure in the tank is the same as a pressure in the tank for storing LPG. Therefore, in a case where a material such as high tension steel used for the tank for LPG is directly applied to the tank for storing liquefied carbon dioxide, there is a possibility that a required toughness cannot be secured.

Therefore, there is a possibility that a new material may be used for the tank for liquefied carbon dioxide instead of the material in the related art, and the reality is that a rule regarding a toughness requirement and the like for the new material is not yet established.

Further, a fracture toughness value is influenced by a temperature or a stress state. Therefore, in a case where the toughness is investigated by simulating the actual machine state, it is necessary to execute a large-sized fracture toughness test. As a result, it may be difficult to acquire a toughness under a condition close to the actual machine state in terms of a cost, a facility, and a period.

The present disclosure has been made to solve the problems described above, and an object of the present disclosure is to provide a tank toughness reliability evaluation method capable of appropriately and easily evaluating a toughness of a tank. Solution to Problem

In order to achieve the above problems, according to the present disclosure, there is provided a toughness reliability evaluation method of a tank, the method including a step of acquiring a requirement fracture toughness value, a step of acquiring a transition temperature of a material, a step of acquiring a fracture toughness value, a step of acquiring a design tolerance condition, a step of acquiring a requirement temperature index, a step of acquiring a tolerance Charpy transition curve, and a step of evaluating a toughness reliability of the material. In the step of acquiring the requirement fracture toughness value, the requirement fracture toughness value is acquired based on a change over time of a predetermined stress intensity factor and a design life of the tank. In the step of acquiring the transition temperature of the material, the transition temperature of the material is acquired from a Charpy transition curve based on a Charpy impact test on the material of the tank at each of test temperatures. In the step of acquiring the fracture toughness value, the fracture toughness value at each of the test temperatures is acquired based on a fracture toughness test on the material of the tank at each of the test temperatures. In the step of acquiring the design tolerance condition, the design tolerance condition that satisfies a fracture toughness characteristic at each temperature index is acquired based on a relationship between the temperature index and the fracture toughness value at each of the test temperatures. The temperature index is a reciprocal number of a difference between each of the test temperatures and the transition temperature. In the step of acquiring the requirement temperature index, the requirement temperature index is acquired based on the design tolerance condition and the requirement fracture toughness value. In the step of acquiring the tolerance Charpy transition curve, the tolerance Charpy transition curve having a requirement transition temperature based on the requirement temperature index is acquired. In the step of evaluating the toughness reliability of the material, the toughness reliability of the material of the tank is evaluated based on the tolerance Charpy transition curve.

According to the present disclosure, there is provided a toughness reliability evaluation method of a tank for evaluating a toughness reliability of the tank based on a transition temperature of a material of the tank acquired from a Charpy transition curve based on a Charpy impact test on the material at each of test temperatures and a fracture toughness value at each of the test temperatures acquired based on a fracture toughness test on the material of the tank at each of the test temperatures. The toughness reliability evaluation method of the tank includes a step of acquiring a requirement fracture toughness value, a step of acquiring a design tolerance condition, a step of acquiring a requirement temperature index, a step of acquiring a tolerance Charpy transition curve, and a step of evaluating the toughness reliability of the material. In the step of acquiring the requirement fracture toughness value, the requirement fracture toughness value is acquired based on a change over time of a predetermined stress intensity factor and a design life of the tank. In the step of acquiring the design tolerance condition, the design tolerance condition that satisfies a fracture toughness characteristic at each temperature index is acquired based on a relationship between the temperature index and the fracture toughness value at each of the test temperatures. The temperature index is a reciprocal number of a difference between each of the test temperatures and the transition temperature. In the step of acquiring the requirement temperature index, the requirement temperature index is acquired based on the design tolerance condition and the requirement fracture toughness value. In the step of acquiring the tolerance Charpy transition curve, the tolerance Charpy transition curve having a requirement transition temperature based on the requirement temperature index is acquired. In the step of evaluating the toughness reliability of the material, the toughness reliability of the material of the tank is evaluated based on the tolerance Charpy transition curve.

### Advantageous Effects of Invention

According to a tank toughness reliability evaluation method of the present disclosure, it is possible to appropriately and easily evaluate a toughness of a tank.

### Brief Description of Drawings

Fig. 1 is a cross-sectional diagram illustrating an example of a tank as an evaluation target by a tank toughness reliability evaluation method according to an embodiment of the present disclosure.
Fig. 2 is a flowchart illustrating a procedure of the tank toughness reliability evaluation method according to the embodiment of the present disclosure.
Fig. 3 is a diagram illustrating an example of a Charpy transition curve acquired in a step of acquiring a material transition temperature according to the embodiment of the present disclosure.
Fig. 4 is a diagram illustrating a correlation between a test temperature and a fracture toughness value, which are acquired in a step of acquiring the fracture toughness value according to the embodiment of the present disclosure.
Fig. 5 is a diagram illustrating a correlation between an elapse period and a stress intensity factor, which is acquired in the step of acquiring the requirement fracture toughness value according to the embodiment of the present disclosure.
Fig. 6 is a diagram illustrating a correlation between a temperature index and the fracture toughness value, and a design line diagram, which are acquired in a step of acquiring a design tolerance condition according to the embodiment of the present disclosure.
Fig. 7 is a diagram illustrating a tolerance Charpy transition curve, which is acquired in a step of acquiring the tolerance Charpy transition curve according to the embodiment of the present disclosure.
Fig. 8 is a diagram illustrating an evaluation for a material according to a step of evaluating a toughness reliability of the material according to the embodiment of the present disclosure, which is performed based on the tolerance Charpy transition curve.
Fig. 9 is a flowchart illustrating a procedure of a tank toughness reliability evaluation method according to a modification example of the embodiment of the present disclosure.

### Description of Embodiments

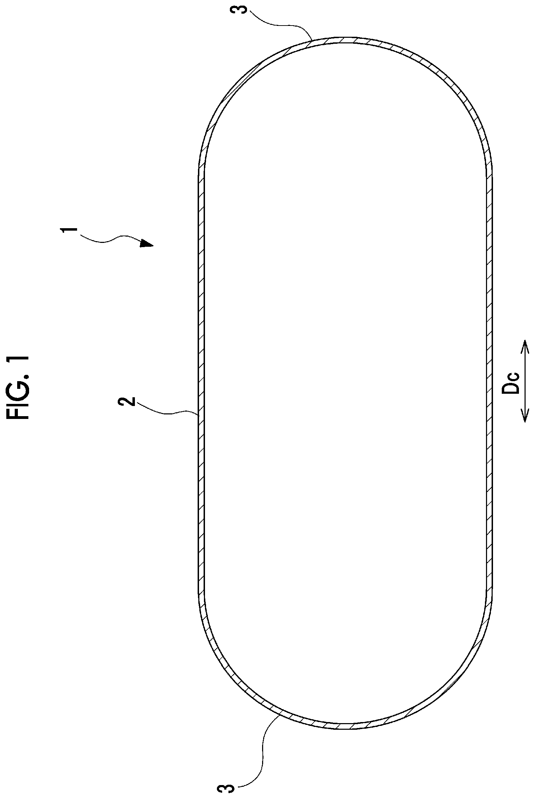

Hereinafter, a tank toughness reliability evaluation method of the present disclosure according to embodiments will be described with reference to Figs. 1 to 8.

### (Configuration of Tank)

As illustrated in Fig. 1, a tank 1 as an object as an evaluation target of the tank toughness reliability evaluation method according to this embodiment can store, for example, a liquefied gas such as liquefied carbon dioxide. The tank 1 is installed in a hull of a ship, a floating main structure of an offshore floating structure facility, an onshore liquefied gas storage facility, or the like. The tank 1 has, for example, a cylindrical shape. The tank 1 includes a tubular portion 2 and a mirror plate portion 3. The tubular portion 2 extends in a central axis direction Dc. In this embodiment, the tubular portion 2 is formed in a cylindrical shape, and has a circular cross-sectional shape orthogonal to the central axis direction Dc. The mirror plate portion 3 is disposed at each of both end portions of the tubular portion 2 in the central axis direction Dc. Each mirror plate portion 3 has a hemispherical shape, and closes an opening of the tubular portion 2 in the central axis direction Dc. The tank 1 is not limited to the cylindrical shape, and may have another shape such as a spherical shape or a square shape. The tank 1 is formed by welding a plurality of steel plate members to each other.

### (Procedure of Tank Toughness Reliability Evaluation Method)

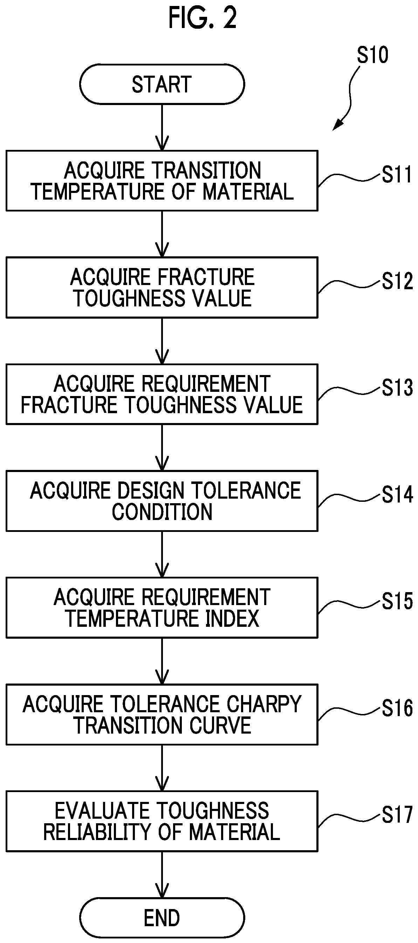

Fig. 2 is a flowchart illustrating a procedure of a tank toughness reliability evaluation method according to the embodiment of the present disclosure.

As illustrated in Fig. 2, a toughness reliability evaluation method S10 of a tank includes a step S11 of acquiring a transition temperature of a material, a step S12 of acquiring a fracture toughness value, a step S13 of acquiring a requirement fracture toughness value, a step S14 of acquiring a design tolerance condition, a step S15 of acquiring a requirement temperature index, a step S16 of acquiring a tolerance Charpy transition curve, and a step S17 of evaluating a toughness reliability of the material.

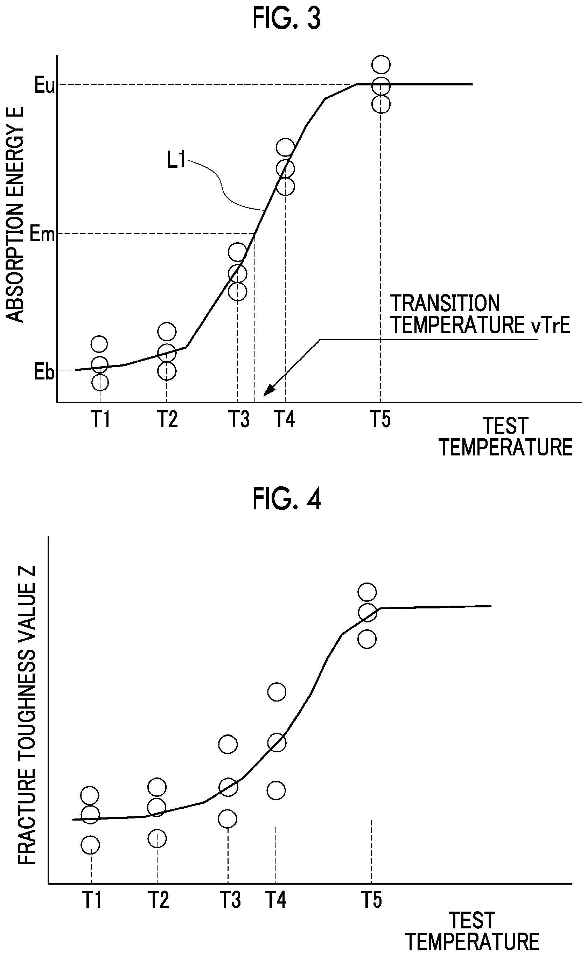

Fig. 3 is a diagram illustrating an example of a Charpy transition curve acquired in a step of acquiring a transition temperature of a material according to the embodiment of the present disclosure.

In the step S11 of acquiring a transition temperature of a material, a Charpy impact test is performed on a material to be adopted for the tank 1. In the Charpy impact test, a test piece of the material to be adopted in the tank 1 is impacted with a hammer to be broken, and a magnitude of energy required to break the test piece is acquired as an absorption energy E. In the present embodiment, as illustrated in Fig. 3, the Charpy impact test is performed at each of a plurality of test temperatures (for example, test temperatures T1 to T5) including an assumed use temperature range of the tank 1 in a state in which liquid carbon dioxide is stored in the tank 1. In the present embodiment, the Charpy impact test is performed, for example, three times at each of the test temperatures T1 to T5. At each of the test temperatures T1 to T5, an average value of the absorption energy E in the Charpy impact tests for the three times is used as a representative value of the absorption energy E at each of the test temperatures T1 to T5. The test temperature and the number of tests for each of the number of tests of the Charpy impact test executed in this step S11 can be appropriately changed.

Next, in the step S11 of acquiring a transition temperature of the material, a Charpy transition curve L1 is obtained based on a correlation between a plurality of test temperatures T1 to T5 and a magnitude of the absorption energy E at each of the test temperatures T1 to T5 of the material of the tank 1. Further, in the obtained Charpy transition curve L1, a transition temperature vTrE of the material of the tank 1 is acquired. In this case, an intermediate value Em of an upper limit value Eu and a lower limit value Eb of the absorption energy E in the Charpy transition curve L1 is obtained. A temperature at the obtained intermediate value Em on the Charpe transition curve L1 is acquired as the transition temperature vTrE. Here, the intermediate value Em is (upper limit value Eu + lower limit value Eb) / 2.

Fig. 4 is a diagram illustrating a correlation between a test temperature and a fracture toughness value, which are acquired in a step of acquiring the fracture toughness value according to the embodiment of the present disclosure.

In the step S12 of acquiring the fracture toughness value, a fracture toughness test is performed on a material to be adopted for the tank 1. In the fracture toughness test, a test piece of the material to be adopted for the tank 1 is cut to form a notch, and a load is applied to the test piece. A stress intensity factor when the test piece is broken due to a crack that develops from the notch as a starting point is acquired as a fracture toughness value Z. The stress intensity factor represents a strength of a stress distribution in the vicinity of a tip of the crack. In the present embodiment, as illustrated in Fig. 4, the fracture toughness test is executed at each of the same test temperatures T1 to T5 in the same manner as the Charpy impact test performed in the step S11. In this step S12, the fracture toughness value Z at each of the test temperatures T1 to T5 is acquired based on the fracture toughness test on the material of the tank 1 at each of the test temperatures T1 to T5.

The steps S11 and S12 described above may be executed by a manufacturer of the tank 1 at a manufacturing site of the tank 1, or may be performed by a material manufacturer that manufactures a steel plate member to be adopted for the tank 1. The material manufacturer provides a facility for performing the Charpy impact test and the fracture toughness test. Therefore, the necessity of performing the particularly fracture toughness test in the manufacturing site of the tank 1 is suppressed.

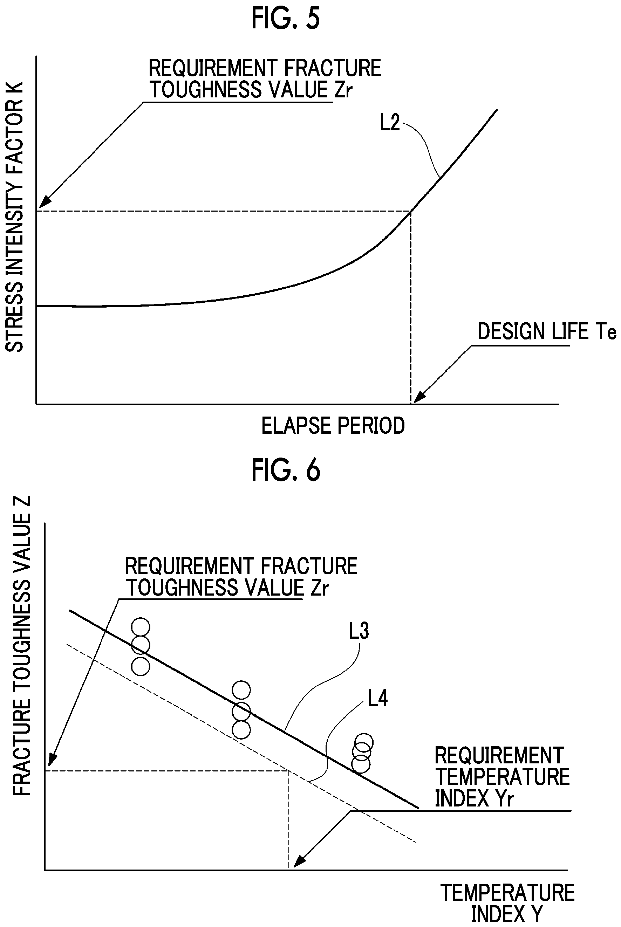

Fig. 5 is a diagram illustrating a correlation between an elapse period and a stress intensity factor K, which are acquired in a step of acquiring a requirement fracture toughness value according to the embodiment of the present disclosure.

In the step S13 of acquiring the requirement fracture toughness value, a requirement fracture toughness value Zr is acquired based on a change over time of the predetermined stress intensity factor K and a design life of the tank 1. Specifically, in the tank 1, in advance, in a case where a crack having a predetermined dimension exists from an initial stage, a change over time of the crack when the tank 1 is used is predicted, by simulation. The simulation is performed based on a preset stress history. Based on a prediction result by the simulation, as illustrated in Fig. 5, a correlation curve L2 indicating a correlation between an elapse period from a start of a use of the tank 1 and the stress intensity factor K is acquired. Further, in the acquired correlation curve L2, a magnitude of the stress intensity factor K at a preset design life Te of the tank 1 is acquired as the requirement fracture toughness value Zr.

Fig. 6 is a diagram illustrating a correlation between a temperature index and a fracture toughness value, and a design line diagram, which are acquired in a step of acquiring a design tolerance condition according to the embodiment of the present disclosure.

In the step S14 of acquiring the design tolerance condition, first, a temperature index Y is acquired. The temperature index Y is calculated by Expression (1) based on the test temperatures T1 to T5 used in the steps S11 and S12 and the transition temperature vTrE acquired in the step S11. As indicated in Expression (1), the temperature index Y is a reciprocal number of a difference between each of the test temperatures T1 to T5 and the transition temperature vTrE. The temperature index Y is calculated in correspondence with each of the test temperatures T1 to T5. Temperature index Y = (test temperature (T1 to T5) - transition temperature vTrE)-1

Further, in the step S14, a correlation line diagram L3 indicating a correlation between the calculated temperature index Y corresponding to each of the test temperatures T1 to T5 and the fracture toughness value Z at each of the test temperatures T1 to T5, which is acquired in the step S12, is acquired.

In the step S14, a design line diagram L4 indicating a design tolerance condition is acquired by using the acquired correlation line diagram L3 as a reference. The design line diagram L4 is set at a predetermined interval with an expected predetermined safety with respect to the correlation line diagram L3. In the design line diagram L4, a magnitude of the fracture toughness value Z for each temperature index Y is smaller than the fracture toughness value Z in the correlation line diagram L3. The design line diagram L4 is set to be parallel to the correlation line diagram L3 in Fig. 6.

In the step S15 of acquiring a requirement temperature index, a requirement temperature index Yr is acquired based on the requirement fracture toughness value Zr acquired in the step S13 and the design line diagram L4 indicating the design tolerance condition set in the step S14. In this case, a value of the temperature index Y corresponding to the requirement fracture toughness value Zr is acquired as the requirement temperature index Yr based on the design line diagram L4.

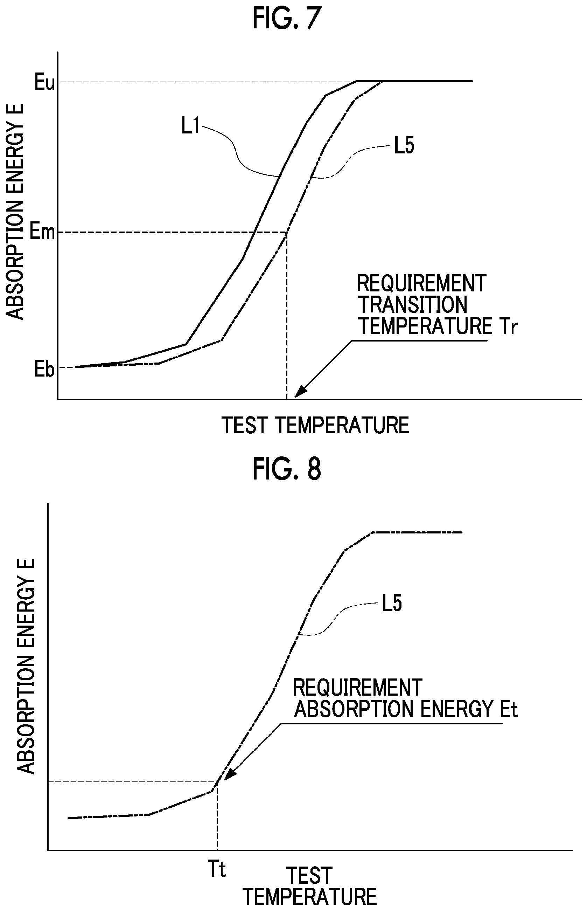

Fig. 7 is a diagram illustrating a tolerance Charpy transition curve acquired in a step of acquiring the tolerance Charpy transition curve according to the embodiment of the present disclosure.

In the step S16 of acquiring the tolerance Charpy transition curve, a requirement transition temperature Tr is acquired by Expression (2) based on the requirement temperature index Yr acquired in the step S15 and a preset design temperature lower limit. In this case, the transition temperature vTrE obtained based on the requirement temperature index Yr is acquired as the requirement transition temperature Tr. Requirement temperature index Yr = (design temperature lower limit - requirement transition temperature Tr)-1

Here, the design temperature lower limit described above is a lower limit value of the design temperature of the tank 1.

In the step S16, a tolerance Charpy transition curve L5 is acquired based on the intermediate value Em of the upper limit value Eu and the lower limit value Eb of the absorption energy E in the Charpy transition curve L1 obtained in the step S11 and the acquired requirement transition temperature Tr. The tolerance Charpy transition curve L5 is represented based on a preset function.

Fig. 8 is a diagram illustrating an evaluation for a material according to a step of evaluating a toughness reliability of the material according to the embodiment of the present disclosure, which is performed based on a tolerance Charpy transition curve.

In the step S17 of evaluating a toughness reliability of a material, as illustrated in Fig. 8, the toughness reliability of the material of the tank 1 is evaluated based on the tolerance Charpy transition curve L5 acquired in the step S16. The step S17 is executed, for example, in a case where the tank 1 is actually manufactured. In this case, a test piece is collected from the tank 1 which is actually manufactured. A material obtained by joining the metallic materials used for the tank 1 by welding may be used as the test piece.

In addition, the step S17 may be executed, for example, in a design stage of the tank 1. In the step S17, for example, the evaluation is performed by using a candidate material that can be adopted as the material of the tank 1 as the test piece.

The evaluation on the toughness reliability of the material is executed by performing a Charpy impact test on the test piece. In this case, a set test temperature Tt of the Charpy impact test in the step S17 is set to, for example, the design temperature lower limit. The set test temperature Tt may be set according to a thickness of the test piece. Specifically, for example, in a case where a thickness t of the test piece is 25 < t ≤ 30, the set test temperature Tt is set to any lower one of a temperature lower than the design temperature of the tank 1 by 10°C and a temperature of -20°C. In addition, in a case where the thickness t of the test piece is 30 < t ≤ 35, the set test temperature Tt is set to any lower one of a temperature lower than the design temperature of the tank 1 by 15°C and a temperature of -20°C. In a case where the thickness t of the test piece is 35 < t ≤ 40, the set test temperature Tt is set to a temperature lower than the design temperature of the tank 1 by 20°C. The set test temperature Tt illustrated here is merely an example, and can be appropriately changed.

In the present embodiment, the set test temperature Tt of the Charpy impact test in the step S17 has only one type determined, for example, as described above. That is, the Charpy impact test in the step S17 is performed only at one type of set test temperature Tt.

The evaluation for the toughness reliability of the material of the tank 1 is performed with the tolerance Charpy transition curve L5 as a reference. Specifically, the determination is made with reference to a requirement absorption energy Et corresponding to the set test temperature Tt at which the Charpy impact test is executed, in the tolerance Charpy transition curve L5. That is, the determination is made as to whether or not the absorption energy E obtained as a result of performing the Charpy impact test on the test piece at the set test temperature Tt exceeds the requirement absorption energy Et at the set test temperature Tt. As a result, in a case where the absorption energy E of the Charpy impact test on the test piece at the set test temperature Tt exceeds the requirement absorption energy Et, it is determined that the toughness reliability of the material used for the test piece satisfies the requirement. In addition, in a case where the absorption energy E of the Charpy impact test on the test piece does not exceed the requirement absorption energy Et, it is determined that the toughness reliability of the material used for the test piece does not satisfy the requirement. In a case where it is determined that the requirement is not satisfied, a designer (manufacturer) of the tank 1 changes a composition, a panel thickness, and the like of the material used for the tank 1, and performs the evaluation again.

### (Actions and Effects)

In the toughness reliability evaluation method S10 of the tank 1 according to the above embodiment, the Charpy impact test and the fracture toughness test are performed on the material of the tank 1, and the transition temperature vTrE and the fracture toughness value Z of the material are acquired. Further, for the tank 1, the requirement fracture toughness value Zr is acquired based on the change over time of the predetermined stress intensity factor K and the design life of the tank 1. Thereafter, a design tolerance condition that satisfies a fracture toughness characteristic is acquired with respect to each temperature index Y, based on a relationship between the temperature index Y, which is a reciprocal number of a difference between each of the test temperatures T1 to T5 and the transition temperature vTrE, and the fracture toughness value Z at each of the test temperatures T1 to T5. Further, the requirement temperature index Yr is acquired based on the design tolerance condition and the requirement fracture toughness value Zr. The tolerance Charpy transition curve L5 having the requirement transition temperature Tr is acquired based on the requirement temperature index Yr. The toughness reliability of the material of the tank 1 can be appropriately evaluated based on the tolerance Charpy transition curve L5 obtained as described above.

Therefore, in a case where the tolerance Charpy transition curve L5 is acquired in advance, the evaluation of the toughness reliability of the material to be adopted in the tank 1 can be executed by performing the Charpy test. That is, it is not necessary to perform a large-scale fracture toughness test, in a manufacturing site of the tank 1.

Therefore, according to the toughness reliability evaluation method of the tank 1 of the present embodiment, a toughness of the tank 1 can be appropriately and easily evaluated.

In the embodiment described above, the stress intensity factor K when the design life of the tank 1 is reached can be acquired as the requirement fracture toughness value Zr, based on the change over time of the stress intensity factor K.

In the embodiment described above, the Charpy transition curve L1 can be acquired, based on the correlation between each of the test temperatures T1 to T5 and the absorption energy E when the Charpy impact test is performed at each of the test temperatures T1 to T5. Further, in the Charpy transition curve L1, a temperature at the intermediate value Em of the upper limit value Eu and the lower limit value Eb of the absorption energy E for the material of the tank 1 can be acquired as the transition temperature vTrE of the material.

In the embodiment described above, the correlation line diagram L3 can be acquired based on a relationship between the temperature index Y which is a reciprocal number of a difference between each of the test temperatures T1 to T5 and the transition temperature vTrE, and the fracture toughness value Z at each of the test temperatures T1 to T5. The design line diagram L4 can be set at a predetermined interval with respect to the acquired correlation line diagram L3. The design tolerance condition can be set as the design line diagram L4 set in this manner.

In the embodiment described above, the temperature index Y corresponding to the requirement fracture toughness value Zr can be acquired as the requirement temperature index Yr in the design tolerance condition of the design line diagram L4.

In the embodiment described above, the transition temperature vTrE obtained based on the requirement temperature index Yr is acquired as the requirement transition temperature Tr, so that the tolerance Charpy transition curve L5 can be acquired based on the requirement transition temperature Tr.

In the embodiment described above, a test piece is collected from the tank 1 actually manufactured, and a Charpy impact test is performed. Then, values of the set test temperature Tt and the absorption energy E for the test piece, which are obtained by the Charpy impact test, are determined by using the tolerance Charpy transition curve L5 as a reference, so that a toughness reliability of the test piece can be evaluated.

In the embodiment described above, the Charpy impact test is performed on the test piece only at the set test temperature Tt, and the toughness reliability of the tank 1 can be easily evaluated.

### (Other Embodiments)

The embodiments of the present disclosure have been described in detail with reference to the drawings hereinbefore. However, the specific configuration is not limited to the embodiments, and includes design changes and the like within a scope not departing from the gist of the present disclosure.

In the embodiment described above, the procedure of the toughness reliability evaluation method S10 of the tank 1 is described, and an order thereof can be appropriately changed.

In addition, in the embodiment described above, the steps S11 to S17 are described as the toughness reliability evaluation method S10 of the tank 1, and for example, the step S11 of acquiring the transition temperature of the material and the step S12 of acquiring the fracture toughness value may be performed in advance by the material manufacturer that provides the material used for the tank 1. In that case, the material manufacturer provides the acquired data of the transition temperature vTrE and the fracture toughness value Z of the material to the manufacturer of the tank 1.

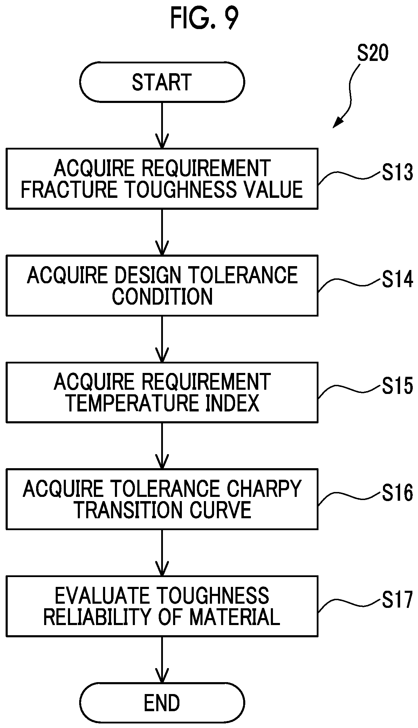

Fig. 9 is a flowchart illustrating a procedure of a toughness reliability evaluation method of a tank according to a modification example of the embodiment of the present disclosure.

In this case, in a toughness reliability evaluation method S20 of the tank 1 as illustrated in Fig. 9, a manufacturer of the tank 1 executes the same steps S13 to S17 as in the embodiment described above, based on the transition temperature vTrE and the fracture toughness value Z acquired in advance by the material manufacturer of the tank 1.

### <Additional Notes>

The toughness reliability evaluation methods S10 and S20 of the tank 1 described in the embodiments are understood as follows, for example.

(1) According to a first aspect, there is provided a toughness reliability evaluation method S10 of a tank 1, the toughness reliability evaluation method S10 including: a step S13 of acquiring a requirement fracture toughness value Zr based on a change over time of a predetermined stress intensity factor K and a design life of the tank 1; a step S11 of acquiring a transition temperature of a material from a Charpy transition curve L1 based on a Charpy impact test on the material of the tank 1 at each of test temperatures T1 to T5; a step S12 of acquiring a fracture toughness value at each of the test temperatures T1 to T5 based on a fracture toughness test on the material of the tank 1 at each of the test temperatures T1 to T5; a step S14 of acquiring a design tolerance condition that satisfies a fracture toughness characteristic at each temperature index Y based on a relationship between the temperature index Y, which is a reciprocal number of a difference between each of the test temperatures T1 to T5 and the transition temperature vTrE, and a fracture toughness value Z at each of the test temperatures T1 to T5; a step S15 of acquiring a requirement temperature index based on the design tolerance condition and the requirement fracture toughness value Zr; a step S16 of acquiring a tolerance Charpy transition curve L5 having a requirement transition temperature Tr based on the requirement temperature index Yr; and a step S17 of evaluating a toughness reliability of the material of the tank 1 based on the tolerance Charpy transition curve L5.

In the toughness reliability evaluation method S10 of the tank 1, the Charpy impact test and the fracture toughness test are performed on the material of the tank 1, and the transition temperature vTrE and the fracture toughness value Z of the material are acquired. Further, for the tank 1, the requirement fracture toughness value Zr is acquired based on the change over time of the predetermined stress intensity factor K and the design life of the tank 1. Thereafter, a design tolerance condition that satisfies a fracture toughness characteristic is acquired with respect to each temperature index Y, based on a relationship between the temperature index Y, which is a reciprocal number of a difference between each of the test temperatures T1 to T5 and the transition temperature vTrE, and the fracture toughness value Z at each of the test temperatures T1 to T5. Further, the requirement temperature index Yr is acquired based on the design tolerance condition and the requirement fracture toughness value Zr. The tolerance Charpy transition curve L5 having the requirement transition temperature Tr is acquired based on the requirement temperature index Yr. The toughness reliability of the material of the tank 1 can be appropriately evaluated based on the tolerance Charpy transition curve L5 obtained as described above.

Therefore, in a case where the tolerance Charpy transition curve L5 is acquired in advance, the evaluation of the toughness reliability of the material to be adopted in the tank 1 can be executed by performing the Charpy test.

As a result, the toughness of the tank 1 can be appropriately and easily evaluated.

(2) According to a second aspect of the toughness reliability evaluation method S10 of the tank 1, in the toughness reliability evaluation method S10 of the tank 1 according to (1), in the step S13 of acquiring the requirement fracture toughness value Zr, the stress intensity factor K when the design life of the tank 1 is reached is acquired as the requirement fracture toughness value Zr, based on the change over time of the stress intensity factor K.

Accordingly, the stress intensity factor K when the design life of the tank 1 is reached can be acquired as the requirement fracture toughness value Zr, based on the change over time of the stress intensity factor K.

(3) According to a third aspect of the toughness reliability evaluation method S10 of the tank 1, in the toughness reliability evaluation method S10 of the tank 1 according to (1) or (2), in the step S11 of acquiring the transition temperature of the material, the Charpy transition curve L1 is acquired based on a correlation between each of the test temperatures T1 to T5 and the absorption energy E when the Charpy impact test is performed at each of the test temperatures T1 to T5, and a temperature at an intermediate value Em of an upper limit value Eu and a lower limit value Eb of the absorption energy E for the material of the tank 1 is acquired as the transition temperature vTrE of the material, based on the Charpy transition curve L1.

Accordingly, the Charpy transition curve L1 can be acquired based on the correlation between each of the test temperatures T1 to T5 and the absorption energy E when the Charpy impact test is performed at each of the test temperatures T1 to T5. Further, in the Charpy transition curve L1, a temperature at the intermediate value Em of the upper limit value Eu and the lower limit value Eb of the absorption energy E for the material of the tank 1 can be acquired as the transition temperature vTrE of the material.

(4) According to a fourth aspect of the toughness reliability evaluation method S10 of the tank 1, in the toughness reliability evaluation method S10 of the tank 1 according to any one of (1) to (3), in the step S14 of acquiring the design tolerance condition, a design line diagram L4 set at a predetermined interval with respect to a correlation line diagram L3 acquired based on a relationship between the temperature index Y, which is a reciprocal number of the difference between each of the test temperatures T1 to T5 and the transition temperature vTrE, and the fracture toughness value Z at each of the test temperatures T1 to T5 is acquired as the design tolerance condition.

Accordingly, the correlation line diagram L3 can be acquired based on the relationship between the temperature index Y which is the reciprocal number of the difference between each of the test temperatures T1 to T5 and the transition temperature vTrE, and the fracture toughness value Z at each of the test temperatures T1 to T5. The design line diagram L4 can be set at a predetermined interval with respect to the acquired correlation line diagram L3. The design tolerance condition can be set as the design line diagram L4 set in this manner.

(5) According to a fifth aspect of the toughness reliability evaluation method S10 of the tank 1, in the toughness reliability evaluation method S10 of the tank 1 according to (4), in the step S15 of acquiring the requirement temperature index, the temperature index Y corresponding to the requirement fracture toughness value Zr is acquired as the requirement temperature index Yr, based on the design tolerance condition of the design line diagram L4.

Accordingly, in the design line diagram L4 as the design tolerance condition, the temperature index Y corresponding to the requirement fracture toughness value Zr can be acquired as the requirement temperature index Yr.

(6) According to a sixth aspect of the toughness reliability evaluation method S10 of the tank 1, in the toughness reliability evaluation method S10 of the tank 1 according to any one of (1) to (5), in the step S16 of acquiring the tolerance Charpy transition curve L5, the transition temperature vTrE obtained based on the requirement temperature index Yr is acquired as the requirement transition temperature Tr, and the tolerance Charpy transition curve L5 is acquired based on the requirement transition temperature Tr.

Accordingly, the transition temperature vTrE obtained based on the requirement temperature index Yr is acquired as the requirement transition temperature Tr, so that the tolerance Charpy transition curve L5 can be acquired based on the requirement transition temperature Tr.

(7) According to a seventh aspect of the toughness reliability evaluation method S10 of the tank 1, in the toughness reliability evaluation method S10 of the tank 1 according to any one of (1) to (6), in the step S17 of evaluating the toughness reliability of the material, a test piece is collected from the tank 1 which is actually manufactured, and the Charpy impact test is performed on the test piece, and, and values of the test temperatures T1 to T5 and the absorption energy E for the test piece, which are obtained by the Charpy impact test, are determined by using the tolerance Charpy transition curve L5 as a reference.

Accordingly, the Charpy impact test is performed by using the material actually used for the tank 1 as the test piece. Then, the values of the test temperatures T1 to T5 and the absorption energy E for the test piece, which are obtained by the Charpy impact test, are determined by using the tolerance Charpy transition curve L5 as a reference, whereby the toughness reliability of the test piece can be evaluated.

(8) According to an eighth aspect of the toughness reliability evaluation method S10 of the tank 1, in the toughness reliability evaluation method S10 of the tank 1 according to (7), in the step S17 of evaluating the toughness reliability of the material, the Charpy impact test is performed on the test piece at a preset set test temperature Tt.

Accordingly, the Charpy impact test is performed on the test piece only at the set test temperature Tt, and the toughness reliability of the tank 1 can be easily evaluated.

(9) According to a ninth aspect, there is provided a toughness reliability evaluation method S20 of a tank 1 for evaluating a toughness reliability of the tank 1 based on a transition temperature vTrE of a material of the tank 1 acquired from a Charpy transition curve L1 based on a Charpy impact test on the material at each of test temperatures T1 to T5 and a fracture toughness value Z at each of the test temperatures T1 to T5 acquired based on a fracture toughness test on the material of the tank 1 at each of the test temperatures T1 to T5, the toughness reliability evaluation method S20 including: a step S13 of acquiring a requirement fracture toughness value Zr based on a change over time of a predetermined stress intensity factor K and a design life of the tank 1; a step S14 of acquiring a design tolerance condition that satisfies a fracture toughness characteristic at each temperature index Y which is a reciprocal number of a difference between each of the test temperatures T1 to T5 and the transition temperature vTrE, based on a relationship between the temperature index Y and the fracture toughness value Z at each of the test temperatures T1 to T5; a step S15 of acquiring a requirement temperature index based on the design tolerance condition and the requirement fracture toughness value Zr; a step S16 of acquiring a tolerance Charpy transition curve L5 having a requirement transition temperature Tr based on the requirement temperature index Yr; and a step S17 of evaluating the toughness reliability of the material of the tank 1 based on the tolerance Charpy transition curve L5.

In the toughness reliability evaluation method S20 of the tank 1, in advance, the Charpy impact test and the fracture toughness test are performed on the material of the tank 1, and the transition temperature vTrE and the fracture toughness value Z of the material are acquired. Further, for the tank 1, the requirement fracture toughness value Zr is acquired based on the change over time of the predetermined stress intensity factor K and the design life of the tank 1. Thereafter, a design tolerance condition that satisfies a fracture toughness characteristic is acquired with respect to each temperature index Y, based on a relationship between the temperature index Y, which is a reciprocal number of a difference between each of the test temperatures T1 to T5 and the transition temperature vTrE, and the fracture toughness value Z at each of the test temperatures T1 to T5. Further, the requirement temperature index Yr is acquired based on the design tolerance condition and the requirement fracture toughness value Zr. The tolerance Charpy transition curve L5 having the requirement transition temperature Tr is acquired based on the requirement temperature index Yr. The toughness reliability of the material of the tank 1 can be appropriately evaluated based on the tolerance Charpy transition curve L5 obtained as described above.

Therefore, in a case where the tolerance Charpy transition curve L5 is acquired in advance, the evaluation of the toughness reliability of the material to be adopted in the tank 1 can be executed by performing the Charpy test.

As a result, the toughness of the tank 1 can be appropriately and easily evaluated.

### Industrial Applicability

According to a tank toughness reliability evaluation method of the present disclosure, it is possible to appropriately and easily evaluate a toughness of a tank.

### Reference Signs List

1: tank
2: tubular portion
3: mirror plate portion
Dc: central axis direction
E: absorption energy
Eu: upper limit value
Eb: lower limit value
Em: intermediate value
Et: requirement absorption energy
K: stress intensity factor
L1: Charpy transition curve
L2: correlation curve
L3: correlation line diagram
L4: design line diagram
L5: tolerance Charpy transition curve
S10, S20: toughness reliability evaluation method of tank
S11: step of acquiring transition temperature of material
S12: step of acquiring fracture toughness value
S13: step of acquiring requirement fracture toughness value
S14: step of acquiring design tolerance condition
S15: step of acquiring requirement temperature index
S16: step of acquiring tolerance Charpy transition curve
S17: step of evaluating toughness reliability of material
T1 to T5: test temperature
Te: design life
Tr: requirement transition temperature
vTrE: transition temperature
Tt: set test temperature
Y: temperature index
Yr: requirement temperature index
Z: fracture toughness value
Zr: requirement fracture toughness value

## Claims

1. A toughness reliability evaluation method of a tank, the method comprising:
a step of acquiring a requirement fracture toughness value based on a change over time of a predetermined stress intensity factor and a design life of the tank;
a step of acquiring a transition temperature of a material of the tank from a Charpy transition curve based on a Charpy impact test on the material at each of test temperatures;
a step of acquiring a fracture toughness value at each of the test temperatures based on a fracture toughness test on the material of the tank at each of the test temperatures;
a step of acquiring a design tolerance condition that satisfies a fracture toughness characteristic at each temperature index which is a reciprocal number of a difference between each of the test temperatures and the transition temperature, based on a relationship between the temperature index and the fracture toughness value at each of the test temperatures;
a step of acquiring a requirement temperature index based on the design tolerance condition and the requirement fracture toughness value;
a step of acquiring a tolerance Charpy transition curve having a requirement transition temperature based on the requirement temperature index; and
a step of evaluating a toughness reliability of the material of the tank based on the tolerance Charpy transition curve.

2. The toughness reliability evaluation method of the tank according to claim 1,
wherein in the step of acquiring the requirement fracture toughness value, the stress intensity factor when the design life of the tank is reached is acquired as the requirement fracture toughness value, based on the change over time of the stress intensity factor.

3. The toughness reliability evaluation method of the tank according to claim 1 or 2,
wherein in the step of acquiring the transition temperature of the material,
the Charpy transition curve is acquired based on a correlation between each of the test temperatures and an absorption energy when the Charpy impact test is performed at each of the test temperatures, and
based on the Charpy transition curve, a temperature at an intermediate value of an upper limit value and a lower limit value of the absorption energy for the material of the tank is acquired as the transition temperature of the material.

4. The toughness reliability evaluation method of the tank according to claim 1 or 2,
wherein in the step of acquiring the design tolerance condition,
a design line diagram set at a predetermined interval with respect to a correlation line diagram acquired based on the relationship between the temperature index, which is the reciprocal number of the difference between each of the test temperatures and the transition temperature, and the fracture toughness value at each of the test temperatures is acquired as the design tolerance condition.

5. The toughness reliability evaluation method of the tank according to claim 4, wherein in the step of acquiring the requirement temperature index,
based on the design line diagram as the design tolerance condition, the temperature index corresponding to the requirement fracture toughness value is acquired as the requirement temperature index.

6. The toughness reliability evaluation method of the tank according to claim 1 or 2,
wherein in the step of acquiring the tolerance Charpy transition curve,
a transition temperature obtained based on the requirement temperature index is acquired as the requirement transition temperature, and
the tolerance Charpy transition curve is acquired based on the requirement transition temperature.

7. The toughness reliability evaluation method of the tank according to claim 1 or 2,
wherein, in the step of evaluating the toughness reliability of the material,
a test piece is collected from the tank which is actually manufactured, and the Charpy impact test is performed on the test piece, and
values of a set test temperature and an absorption energy for the test piece, which are obtained by the Charpy impact test, are determined by using the tolerance Charpy transition curve as a reference.

8. The toughness reliability evaluation method of the tank according to claim 7,
wherein in the step of evaluating the toughness reliability of the material,
the Charpy impact test is performed on the test piece at a preset set test temperature.

9. A toughness reliability evaluation method of a tank for evaluating a toughness reliability of the tank based on a transition temperature of a material of the tank acquired from a Charpy transition curve based on a Charpy impact test on the material at each of test temperatures and a fracture toughness value at each of the test temperatures acquired based on a fracture toughness test on the material of the tank at each of the test temperatures, the method comprising:
a step of acquiring a requirement fracture toughness value based on a change over time of a predetermined stress intensity factor and a design life of the tank;
a step of acquiring a design tolerance condition that satisfies a fracture toughness characteristic at each temperature index which is a reciprocal number of a difference between each of the test temperatures and the transition temperature, based on a relationship between the temperature index and the fracture toughness value at each of the test temperatures;
a step of acquiring a requirement temperature index based on the design tolerance condition and the requirement fracture toughness value;
a step of acquiring a tolerance Charpy transition curve having a requirement transition temperature based on the requirement temperature index; and
a step of evaluating the toughness reliability of the material of the tank based on the tolerance Charpy transition curve.
